# EUROPEAN PATENT APPLICATION

(11) **EP 3 059 068 A1**
(43) Date of publication of application: **24.08.2016**
(21) Application number: 16156768.0
(22) Date of filing: 22.02.2016
(51) Int. Cl.: B29C 47/08, B29C 47/60, B29C 47/40, B29C 47/64, C08L 71/12, C08L 25/04

(54) **PROCESS AND APPARATUS FOR PRODUCING A BLEND OF STYRENE RESIN AND POLYPHENYLENE ETHER**

(30) Priority: 20.02.2015 IN 816CH2015
(71) Applicant: Steer Engineering Private Limited, Bangalore 560 058 (IN)
(72) Inventor: RODEN, Robert, Angelus Oaks, CA, 92305 (US); HADIMANI, Prakash, 560058 BANGALORE (IN); SAMBHU, Bhadra, 560058 BANGALORE (IN)
(74) Representative: Hart-Davis, Jason

(57) **Abstract**

A process for preparing a blend having a styrene resin and a polyphenylene ether in a corotating twin screw processor, comprising providing in the twin screw processor, at least one processing zone including at least one element comprising a continuous flight helically formed thereon having a lead 'L', wherein either the flight transforms at least once from an integer lobe flight into a non-integer lobe flight in a fraction of the lead 'L' and transforms back to an integer lobe flight in a fraction of the lead 'L' or the flight transforms at least once from a non-integer lobe flight to an integer lobe flight in a fraction of the lead 'L' and transforms back to an non-integer lobe flight in a fraction of the lead 'L' and at least one fractional lobe element intermediate a first integer element (n) and a second integer element (N), feeding the styrene resin and the polyphenylene ether in the twin screw processor, melting the styrene resin and solubilizing the polyphenylene ether in the molten styrene resin in the at least one processing zone, and receiving the blend of the styrene resin and the polyphenylene ether from the twin screw processor.

## Description

### TECHNICAL FIELD

The present disclosure relates to blends of polyphenylene ethers and styrene resins. More specifically, it relates to blends of polyphenylene ethers and styrene resins having improved appearance and qualities and a process and a system for preparing such blends.

### BACKGROUND

Polyphenylene ether (PPE) is a high performance engineering thermoplastic material possessing relatively high melt viscosities and softening points. However, PPE has a high glass transition temperature (Tg) of about 215 °C and melting point of up to 262 °C and requires high processing temperatures (over 250 °C). At such high temperatures, the polymer is inherently unstable resulting in an increase in its melt viscosity and causing a variety of reactions. Due to this reason, PPE is usually processed by blending with other polymers, for example, various kinds of styrene resins such as polystyrene (PS). US patent 3,383,435 is directed to improvement of melt processability of PPE by blending it with a styrene resin. The blends of PPE and styrene resins exhibit good high temperature performance and processability. These blends are used in various applications, for example, electrical/electronic appliances, business machines, various exterior materials, industrial articles and food packaging.

Conventional processes for preparing blends of PPE and styrene resin include melt blending PPE with one or more type of styrene resin in an extruder. The process involves feeding PPE, styrene resin and other additives to the extruder and melt-kneading them. A significant amount of energy is transferred into PPE to ensure that it completely melts. Medium and wide lobe kneading blocks are provided in the extruder that exposes the materials to very high shear rates. A combination of thermal convection from the heated extruder barrel along with shear, compression, and friction provided by the kneading blocks heats PPE above its melting point. As PPE is melting, its polymer chains are in close contact with each other and they begin to oxidize resulting in a decrease in the molecular weight of PPE. Continuation of the high thermal and shear stress causes the PPE to become darker in colour eventually turning dark brown. It also affects the viscoelastic behavior of PPE and the quality and processability of the blend making it difficult to process in secondary operations such as injection and compression molding. Eventually, the PPE loses all viscoelastic properties and is charred. The blend obtained is dirty yellow to brown in colour and the char creates a particulate contaminant suspended in the blend visible as dark spots in the product.

For many applications, especially in the electronics industry, it is desired that the PPE and styrene resin blend has satisfactory appearance so as to be suitable for use as large molded articles, for example, the housings of large television receivers, copiers, printers, and the like. Several solutions have been proposed to improve the appearance of PPE and styrene resin blends.

Usually, the blends are pigmented to hide contaminants and improve product appearance. Typical blends require up to 10 percent of titanium dioxide to mask the colour of the blend that not only adds to the cost but also affects quality of the product. US patent 3,639,334 is directed to improving the appearance of PPE-PS blend by adding one or more additives to the blend as stabilizers. US patent 4,588,764 discloses addition of a diphosphite material to PPE-PS blend to reduce the initial yellowness index of the blend. US patent 5,438,086 discloses a bis(aralkylphenyl)pentaerythritol diphosphite that can be used in combination with a class of hindered phenols and UV stabilizers to maintain colour and minimize melt-degradation of a polymer. However, addition of pigments and/or other additives in the blend further affects the properties of the blend and increases manufacturing cost.

US patent 7,541,399 discloses a process for producing a composition comprising PPE and a styrene resin. The process comprises melt-kneading PPE and a first styrene resin to obtain a melt-kneaded product and further melt-kneading the melt-kneaded product with a second styrene resin. The composition obtained is said to be free from appearance defects such as black foreign particles, unmelted matter, and colour unevenness. However, the process is a multi-step process with limitations on the types of styrene resins used.

There remains a need for a safe, cost effective and efficient process for making blends of PPE and styrene resin that are free from appearance defects and exhibits better processability. There is also a need for a process for making such blends that does not produce acrid odor associated with the processing of PPE.

### SUMMARY

The present disclosure relates to a co-rotating twin screw processor for preparing a blend having a styrene resin and a polyphenylene ether (PPE). The twin screw processor comprises a first processing zone comprising at least one element comprising a continuous flight helically formed thereon having a lead `L', wherein either the flight transforms at least once from an integer lobe flight into a non-integer lobe flight in a fraction of the lead 'L' and transforms back to an integer lobe flight in a fraction of the lead 'L' or the flight transforms at least once from a non-integer lobe flight to an integer lobe flight in a fraction of the lead 'L' and transforms back to an non-integer lobe flight in a fraction of the lead 'L' {hereinafter referred to as Dynamic Stirring Element (DSE)} and at least one fractional lobe element intermediate a first integer element (n) and a second integer element (N) {hereinafter referred to as Fractional Mixing Element (FME)}; and a second processing zone comprising at least one DSE and at least one FME. The first and the second processing zone are separated by at least one conveying element or at least one mixing element or a combination of the at least one conveying element and the at least one mixing element. The first and the second processing zones are configured to collectively melt the styrene resin and solubilize the PPE in the molten styrene resin.

The present disclosure also relates to a process for preparing a blend having a styrene resin and a PPE in a co-rotating twin screw processor. The process comprises providing in the twin screw processor, at least one processing zone including at least one DSE and at least one FME, feeding the styrene resin and the PPE in the twin screw processor, melting the styrene resin and solubilizing the PPE in the molten styrene resin in the at least one processing zone, and receiving the blend of the styrene resin and the PPE from the twin screw processor.

The present disclosure further relates to a blend having a styrene resin and a PPE wherein the PPE is in the concentration range of 10 to 50 percent w/w and the blend has a whiteness index of at least 45.

### BRIEF DESCRIPTION OF DRAWINGS

FIG. 1A is a photograph of a blend of a PPE and a styrene resin prepared by a conventional process and a blend of a PPE and a styrene resin in accordance with an embodiment of the present disclosure.
FIG. 1B is another photograph of blends of a PPE and a styrene resin prepared by conventional process and a blend of a PPE and a styrene resin in accordance with an embodiment of the present disclosure.
FIG. 2 is a screw design for a co-rotating twin screw extruder used to carry out the conventional process.
FIG. 3 is a screw design for a co-rotating twin screw processor used to carry out the process in accordance with an embodiment of the present disclosure.

### DETAILED DESCRIPTION

The present disclosure relates to a co-rotating twin screw processor for preparing a blend having a styrene resin and a polyphenylene ether (PPE). The twin screw processor comprises a first processing zone that includes at least one element having a continuous flight helically formed thereon having a lead 'L', wherein either the flight transforms at least once from an integer lobe flight into a non-integer lobe flight in a fraction of the lead 'L' and transforms back to an integer lobe flight in a fraction of the lead 'L' or the flight transforms at least once from a non-integer lobe flight to an integer lobe flight in a fraction of the lead 'L' and transforms back to an non-integer lobe flight in a fraction of the lead 'L' {hereinafter referred to as a Dynamic Stirring Element (DSE)}. The first processing zone also includes at least one fractional lobe element intermediate a first integer element (n) and a second integer element (N) {hereinafter referred to as a Fractional Mixing Element (FME)}. A fractional lobed element is an element intermediate a first integer element (n) and a second integer element (N) by a predefined fraction, such that N/n is an integer and the fraction determines the degree of transition between the first integer and the second integer. A single flight lobe and a bi-lobe can form fractional lobes such as 1.2.xx, where xx an be any number from 1 to 99. The numbers 1 to 99 define whether the fractional lobe will look more like a single flight element or a bi-lobed element. The numbers 1 and 2 in the notation 1.2.xx represent the lobe element intermediate a single flight element (1) and a bi-lobe element respectively (2).The twin screw processor further comprises a second processing zone that also includes at least one DSE and at least one FME. The first processing zone and the second processing zones are separated by at least one conveying element or at least one mixing element or a combination of the at least one conveying element and the at least one mixing element. The first processing zone and the second processing zones are configured to collectively melt the styrene resin and solubilize the PPE in the molten styrene resin.

In accordance with an embodiment of the present disclosure, the twin screw processor further comprises a third processing zone comprising at least one DSE and at least one FME. The third processing zone is separated from the second processing zone by at least one conveying element or at least one mixing element or a combination of the at least one conveying element and the at least one mixing element. The third processing zone is configured to melt and solubilize the PPE in the molten styrene resin along with the first and the second processing zone.

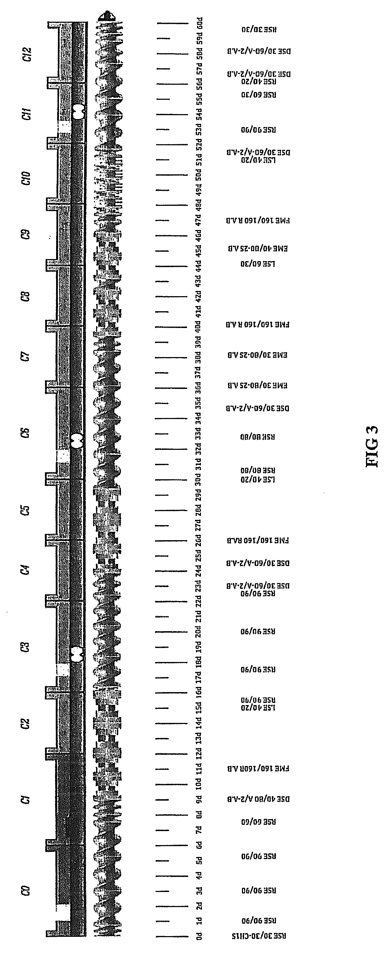

In an embodiment, the first processing zone comprises two DSE elements and one FME and the first processing zone begins prior to the mid-point of the twin screw processor. In the screw configuration of Fig 3, the elements mounted on the processor barrel C4 form a part of the first processing zone.

The twin screw processor also comprises an input zone and an outlet zone. In an embodiment of Fig 3, barrel C0 forms the input zone whereas barrel C12 forms an outlet. In accordance with another embodiment, the twin screw processor comprises a zone prior to the processing zone (hereinafter referred to as softening zone) to soften the styrene resin. In an embodiment, the twin screw processor further comprises one or more side feeders. The one or more side feeders can be located on the input zone, the softening zone and/or processing zone.

In an embodiment, the twin screw processor has a long L/D ratio for desired residence time, high free volume, low shear signature and tight tolerances. The twin screw processor can be a co-rotating twin screw extruder. In accordance with an embodiment, the extruder has an L/D ratio of 40/60. In another embodiment, the extruder has an L/D ratio of 60. In an example, the extruder is Omega Class 40mm extruder manufactured by STEER Engineering Pvt. Ltd.

The input zone may have short lead kneading elements. The short lead kneading elements increase the residence time of the material in the input zone.

In accordance with an embodiment, the softening zone is placed between the input zone and the processing zone. The softening zone comprises a heating system and may include at least one DSE and at least one FME. The styrene resin is conveyed to the softening zone from the intake zone.

The present disclosure also relates to a process for preparing a blend having a styrene resin and a PPE in a co-rotating twin screw processor. The process comprises providing in the twin screw processor, at least one processing zone including at least one DSE (disclosed above) and at least one FME (disclosed above), feeding the styrene resin and the PPE in the twin screw processor, melting the styrene resin and solubilizing the PPE in the molten styrene resin in the at least one processing zone; and extruding the blend of the styrene resin and the PPE from the twin screw processor.

The temperature of the processing zone is in the range of 160 °C to 220 °C. The residence time in the processing zone is in the range of 2 to 4 seconds. The temperature and the residence time in the processing zone are not sufficient to cause significant melting of the polyphenylene ether.

The combination of DSE and the FME produce a disruptive splitting and recombination of mixture of the molten styrene resin and the PPE as the mixture is conveyed. They provide a combination of distributive and elongational mixing along with better melt temperature control. The distributive mixing spreads minor components throughout matrix of the styrene resin and the PPE thereby obtaining a good spatial distribution. The elongational mixing provides tensile forces. The use of tensile forces results in gently pulling away of polymeric chains of the PPE thereby solubilizing the PPE in the molten styrene resin. Further, the elongational mixing renews surface area of the mixture and therefore, enhances the solubilization of the PPE in the molten styrene resin.

In an embodiment, two processing zones are provided in the twin screw processor. The two processing zones are separated by at least one conveying element or at least one mixing element or a combination of the at least one conveying element and the at least one mixing element. Further, the two processing zones configured to collectively melt the styrene resin and solubilize the PPE in the molten styrene resin.

The styrene resin and the PPE can be fed to the intake zone of the processor through the feed throat and/or the one of more of the side feeders (disclosed above) simultaneously. The styrene resin and the PPE are fed into the twin screw processor at a feed rate of 20 to 50 kilogram per hour. In accordance with an embodiment, the styrene resin is fed into the twin screw processor in a form of pellets and the PPE is fed into the twin screw processor in a form of powder.

The blend comprises the PPE in the range of 1 percent to 99 percent w/w. In accordance with a preferred embodiment, the blend comprises the PPE in the range of 10 percent to 50 percent w/w.

The styrene resin can be a homopolymer of styrene resin, a co-polymer of styrene resin or a combination thereof. Examples of styrene resin include but are not limited to polystyrene (PS), general purpose polystyrene (GPPS), High Impact Polystyrene (HIPS), styrene acrylonitrile, acrylonitrile butadiene styrene resin or a combination thereof. In accordance with an embodiment, the styrene resin is polystyrene (PS) or GPPS. In accordance with an embodiment, the blend comprises the polyphenylene ether, the GPPS and the HIPS.

In accordance with an embodiment, the residence time in the input zone (disclosed above) is in the range of 1 to 2 seconds. The temperature in the input zone is in the range of 25 to 30 °C. The high residence time and the temperature of the input zone result in initiation of softening or melting of the styrene resin as it is conveyed down the input zone.

The process is carried out at a screw speed of 60 to 200 rpm of the twin screw processor.

In accordance with an embodiment, the blend is recovered in a form of pellets, strands or sheets.

In accordance with an embodiment, the styrene resin is softened further in the softening zone (disclosed above) as it is conveyed from the input zone to the processing zone. The temperature in the softening zone is in the range of 120 to 300 °C. The residence time in the softening zone is in the range of 1 to 2 seconds. The temperature and residence time in the softening zone are not sufficient to cause significant melting of the polyphenylene ether.

In accordance with an embodiment, the PPE is fed into the twin screw processor after the styrene resin has been softened or melted.

In accordance with an embodiment, the process further comprises applying vacuum before obtaining the blend to remove volatile organic compounds or fumes released during the process.

The disclosed process does not involve use of high shear and compressional forces to melt both the PPE and the styrene resin. Therefore, there is no or insignificant thermal oxidation of the PPE during the preparation of the blend. This significantly reduces or eliminates yellowing and/or charring of the PPE in the blend. Further, generation of excessive volatile organic compounds or fumes is also reduced.

The blend is free from appearance defects such as presence of dark spots formed due to charring and colour unevenness. In accordance with an embodiment, the blend is white coloured. In accordance with an embodiment blend is light yellow to light creamy in colour. The blend is transparent or translucent. The blend exhibits improved strength and better processability.

The present disclosure also relates to a blend of a styrene resin and PPE. The PPE is in the concentration range of 10 to 50 percent w/w. The blend has a whiteness index of at least 45. The whiteness index is measured by BGD 556, Precise Computer Colorimeter, manufactured by Biuged Laboratory Instruments (Guangzhou) Co. Ltd.

In accordance with an embodiment, the PPE is in the concentration range of 10 to 12 percent w/w and the blend has a whiteness index of at least 60.

In accordance with an embodiment, the PPE is in a concentration range of 20 to 30 percent w/w and the blend has a whiteness index of at least 50.

In accordance with an embodiment, the PPE is in a concentration range of 50 percent w/w and the blend has a whiteness index of at least 45.

In accordance with an embodiment, blend is in a form of pellets, strands or sheets.

In accordance with an embodiment, the blend has less than 10 percent dark spots visible on the surface of the pellets or strands, the dark spots formed by the polyphenylene ether and the styrene resin.

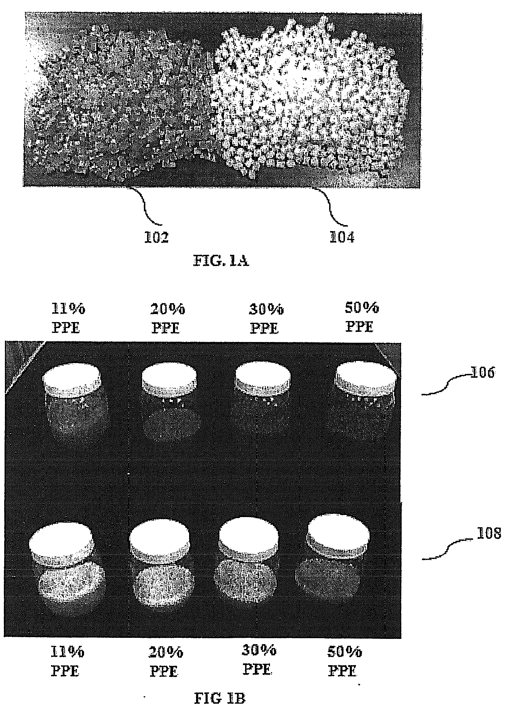

FIG 1A is a photograph of a blend 102 of a PPE and a styrene resin prepared by conventional process and the blend 104 in accordance with an embodiment of the present disclosure. The conventional process involves melt blending of the PPE. As can be seen in the photograph, 104 is significantly whiter than 102.

FIG 1B is another photograph of a PPE and a styrene resin 106 prepared by the conventional process and the blends 108 in accordance with an embodiment of the present disclosure.

### EXAMPLES

### Example 1: Preparation of PPE and styrene resin blends by conventional process involving melt- blending:

**Extruder specification:** Omega-40 H, Motor Power: 160 KW, Max Screw Speed: 1200 RPM, Max Torque: 500Nm/ shaft, Specific Torque: 17.1 Nm/cm3, Barrel Diameter: 40mm, Screw Diameter: 39.7mm, L/D: 60, Centre distance: 32

**Table 1: Screw Elements and Configuration**

| **Features** | **Screw type Configuration** |
|---|---|
| Element length | 2400 mm |
| Maximum Screw Speed | 1200 rpm |
| Maximum motor power | 160 KW |
| Diameter | 39.7 mm |
| Percentage of kneading blocks | 37.68 |
| Offset | 0 mm |

| **Screw Elements** | |
|---|---|
| **Element Number** | **Screw Element type** |
| 1. | RSE 30/30-CH1S |
| 2. | RSE 90/90 |
| 3. | RSE 90/90 |
| 4. | RSE 90/90 |
| 5. | RSE 40/20 |
| 6. | RSE 40/40 |
| 7. | RKB 45/5/60 |
| 8. | RKB 45/5/60 |
| 9. | RKB 45/5/80 |
| 10. | RKB 45/5/80 |
| 11. | LKB 45/5/15 |
| 12. | RSE 80/80 |
| 13. | RSE 80/80 |
| 14. | RSE 80/80 |
| 15. | RSE 60/60 |
| 16. | RKB 45/5/60 |
| 17. | RKB 45/5/80 |
| 18. | RKB 45/5/80 |
| 19. | RSE 90/90 |
| 20. | RSE 90/90 |
| 21. | RSE 90/90 |
| 22. | RSE 90/90 |
| 23. | RSE 40/40 |
| 24. | RKB 45/5/60 |
| 25. | RKB 45/5/60 |
| 26. | RSE 60/30 |
| 27. | RKB 45/5/60 |
| 28. | RKB 45/5/60 |
| 29. | RSE 60/30 |
| 30. | RSE 40/20 |
| 31. | RKB 45/5/20 |
| 32. | NKB 90/5/20 |
| 33. | RKB 45/5/20 |
| 34. | NKB 90/5/20 |
| 35. | RKB 45/5/15 |
| 36. | NKB 90/5/20 |
| 37. | RKB 45/5/15 |
| 38. | NKB 90/5/20 |
| 39. | LSE 40/20 |
| 40. | RFV 90/90 |
| 41. | RFN 90/45 |
| 42. | RSE 90/90 |
| 43. | RSE 60/60 |
| 44. | RSE 40/20 |
| 45. | RSE 30/30 |

### List of Abbreviations for Elements

- RSE: Right Handed Screw Element
- RFV: Right Handed Shovel Element
- RFN: Right Handed Transition Element
- LSE: Left Handed Screw Element
- DSE: Dynamic Stirring Element
- RKB: 45 degree stagger angle Right Handed Kneading Block
- NKB: 90 degree stagger angle (Neutral) Kneading Block

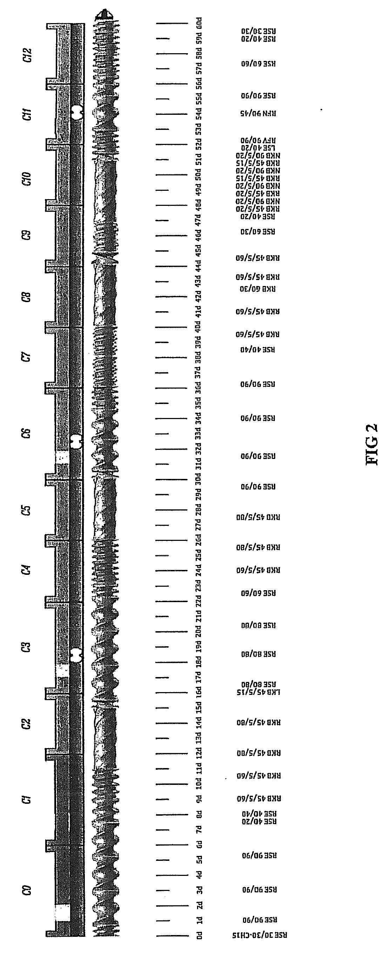

The screw design for the co-rotating twin screw extruder is depicted in Fig 2.

**Table 2: Types of Blends Prepared**

| **Material** | **Quantity (Percentage)** | | | |
|---|---|---|---|---|
| | **Blend 1** | **Blend 2** | **Blend 3** | **Blend 4** |
| Polyphenylene ether | 11 | 20 | 30 | 50 |
| HIPS | 48 | 42 | 38 | 28 |
| GPPS | 41 | 38 | 32 | 22 |

PPE and HIPS were added through main feeder and GPPS was added through a Side Feeder

**Table 3: Process Parameters**

| **Parameter /Type of Product Obtained** | | **Blend 1** | **Blend 2** | **Blend 3** | **Blend 4** |
|---|---|---|---|---|---|
| Feed rate (KG/H) | HIPS | 4.8 | 4.2 | 3.8 | 2.8 |
| | PPE | (GF*) 1.1 | 2 | 3 | 5 |
| | GPPS | 4.1 | 3.8 | 3.2 | 2.2 |
| Total Output (kg/h) | | 10 | 10 | 10 | 10 |
| Screw Speed (RPM) | | 80 | 80 | 80 | 80 |
| Torque (Percent) | | 11 | 13 | 16 | 19 |
| Power (KW) | | 1.5 | 1.8 | 1.7 | 2.2 |
| Specific Mechanical Energy (KWh/Kg) | | 0.15 | 0.18 | 0.17 | 0.22 |
| Current (Amp) | | 78 | 80 | 84 | 86 |
| Melt Pressure (Bar) | | 26 | 20 | 22 | 25 |
| Melt Temperature (°C) | | 353 | 354 | 354 | 353 |
| Vacuum (mm/hg) | | 400 | 400 | 400 | 400 |
| Type or Product Obtained | | Pellets | Pellets | Pellets | Pellets |
| Method of Cut (Strand/Die Face) | | Strand | Strand | Strand | Strand |
| Colour of the Product/Strand | | Yellow | Brownish - Yellow | Dark Yellow | Dark Yellow |

| | | | | | |
|---|---|---|---|---|---|
| *GF: Gravimetric feeder | | | | | |

**Table 4: Barrel Temperature**

| **Barrel No.** | **Blend 1** | | **Blend 2** | | **Blend 3** | | **Blend 4** | |
|---|---|---|---|---|---|---|---|---|
| | **Temperature (°C)** | | | | | | | |
| | **Set** | **Actual** | **Set** | **Actual** | **Set** | **Actual** | **Set** | **Actual** |
| Feed | - | 27 | - | 34 | - | 37 | - | 44 |
| B2 | 320 | 248 | 320 | 241 | 320 | 252 | 320 | 253 |
| B3 | 320 | 320 | 320 | 320 | 320 | 320 | 320 | 320 |
| B4 | 320 | 312 | 320 | 314 | 320 | 315 | 320 | 314 |
| B5 | 300 | 300 | 300 | 300 | 300 | 300 | 300 | 300 |
| B6 | 300 | 302 | 300 | 301 | 300 | 301 | 300 | 303 |
| B7 | 300 | 302 | 300 | 302 | 300 | 302 | 300 | 302 |
| B8 | 300 | 300 | 300 | 300 | 300 | 301 | 300 | 300 |
| B9 | 300 | 301 | 300 | 300 | 300 | 300 | 300 | 300 |
| B10 | 300 | 301 | 300 | 301 | 300 | 301 | 300 | 301 |
| B11 | 300 | 301 | 300 | 300 | 300 | 301 | 300 | 302 |
| B12 | 300 | 300 | 300 | 300 | 300 | 300 | 300 | 302 |
| B13 | 300 | 301 | 300 | 301 | 300 | 301 | 300 | 301 |
| DA* | 320 | 320 | 320 | 320 | 320 | 320 | 320 | 320 |
| DH** | 320 | 320 | 320 | 321 | 320 | 322 | 320 | 321 |

| | | | | | | | | |
|---|---|---|---|---|---|---|---|---|
| *DA: Die-adaptor; **DH: Die-head | | | | | | | | |

**Table 5: No. of Die Holes**

| | | | | | | | | |
|---|---|---|---|---|---|---|---|---|
| **No. of Die Holes** | **Blend 1** | | **Blend 2** | | **Blend 3** | | **Blend 4** | |
| | **Set** | **Actual** | **Set** | **Actual** | **Set** | **Actual** | **Set** | **Actual** |
| | - | 2 | - | 1 | - | 1 | - | 1 |

### Example 2: Preparation of PPE and styrene resin blend in accordance with an embodiment of the present disclosure.

**Extruder specification:** Omega-40 H, Motor Power: 160 KW, Max Screw Speed: 1200 RPM, Max Torque: 500Nm / shaft, specific Torque: 17.1 Nm/cm3, Barrel Diameter: 40mm, Screw Diameter: 39.7mm, L/D: 60, Centre Distance: 32

**Table 6: Screw Elements and Configuration**

| **Features** | **Screw type Configuration** |
|---|---|
| Element length | 2400 mm |
| Maximum Screw Speed | 1200 rpm |
| Maximum motor power | 37 KW |
| Diameter | 39.7 mm |
| Percentage of kneading blocks | 0 (No kneading blocks used) |
| Offset | 0 mm |

| **Screw Elements** | |
|---|---|
| **Element Number** | **Screw Element type** |
| 1. | RSE 30/30-CH1S |
| 2. | RSE 90/90 |
| 3. | RSE 90/90 |
| 4. | RSE 90/90 |
| 5. | RSE 60/60 |
| 6. | DSE 40/80 A/2-A.B |
| 7. | FME 160/160 R A.B |
| 8. | LSE 40/20 |
| 9. | RSE 90/90 |
| 10. | RSE 90/90 |
| 11. | RSE 90/90 |
| 12. | RSE 30/30 |
| 13. | DSE 30/60 A/2-A.B |
| 14. | DSE 30/60 A/2-A.B |
| 15. | FME 160/160 R A.B |
| 16. | LSE 40/20 |
| 17. | RSE 80/80 |
| 18. | RSE 80/80 |
| 19. | DSE 30/60 A/2-A.B |
| 20. | EME 30/80-2S A.B |
| 21. | EME 30/80-2S A.B |
| 22. | FME 160/160 R A.B |
| 23. | LSE 60/30 |
| 24. | EME 40/80-2S A.B |
| 25. | FME 160/160 R A.B |
| 26. | LSE 40/20 |
| 27. | DSE 30/60 A/2-A.B |
| 28. | RSE 90/90 |
| 29. | RSE 60/30 |
| 30. | RSE 40/20 |
| 31. | DSE 30/60 A/2-A.B |
| 32. | DSE 30/60 A/2-A.B |
| 33. | RSE 30/30 |

### List of Abbreviations for Elements

- RSE: Right Handed Screw Element
- LSE: Left Handed Screw Element
- DSE: Dynamic Stirring Element
- FME: Fractional Mixing Elements
- EME: Eccentric Mixing Elements

The screw design for a co-rotating twin screw extruder is depicted in Fig 3.

**Table 7: Types of Blends Prepared**

| **Material** | **Quantity (Percentage)** | | | |
|---|---|---|---|---|
| | **Blend 1** | **Blend 2** | **Blend 3** | **Blend 4** |
| PPE | 11 | 20 | 30 | 50 |
| HIPS | 48 | 42 | 38 | 28 |
| GPPS | 41 | 38 | 32 | 22 |

PPE and HIPS were added through main feeder and GPPS was added through a Side Feeder.

**Table 8: Process Parameters**

| **Parameter /Type of Product Obtained** | | **Blend 1** | **Blend 2** | **Blend 3** | **Blend 4** |
|---|---|---|---|---|---|
| KG/H | HIPS | 19.2 | 16.8 | 15.2 | 11.2 |
| | PPE | 4.4 | 8.0 | 12.0 | 20 |
| | GPPS | 16.4 | 15.2 | 12.8 | 8.8 |
| Total Output (kg/h) | | 40 | 40 | 40 | 40 |
| Screw Speed (RPM) | | 80 | 80 | 120 | 150 |
| Torque (Percent) | | 63-75 | 65-74 | 62-73 | 66-75 |
| Power (KW) | | 8.1 | 8.8 | 11.4 | 15.4 |
| Specific Mechanical Energy (KWh/Kg) | | 0.20 | 0.2 | 0.2 | 0.3 |
| Current (Amp) | | 143 | 163 | 162 | 164 |
| Melt Pressure (Bar) | | 26 | 20 | 22 | 25 |
| Melt Temperature (°C) | | 200 | 207 | 210 | 215 |
| Vacuum (mm/hg) | | 400 | 400 | 400 | 400 |
| Type or Product Obtained (Strands/Pellets/Sheet) | | Pellets | Pellets | Pellets | Pellets |
| Method of Cut (Strand/Die Face) | | Strand | Strand | Strand | Strand |
| Colour of Product/Strand | | White | White | Pale Yellow | Yellow |

**Table 9: Barrel Temperature**

| **Barrel No.** | **Blend 1** | | **Blend 2** | | **Blend 3** | | **Blend 4** | |
|---|---|---|---|---|---|---|---|---|
| | **Temperature (°C)** | | | | | | | |
| | **Set** | **Actual** | **Set** | **Actual** | **Set** | **Actual** | **Set** | **Actual** |
| **Intake Zone** | - | 32 | - | 29 | - | 34 | - | 39 |
| **B2** | 200 | 190 | 200 | 190 | 200 | 190 | 200 | 190 |
| **B3** | 200 | 198 | 200 | 198 | 200 | 198 | 200 | 198 |
| **B4** | 200 | 198 | 200 | 198 | 200 | 198 | 200 | 198 |
| **B5** | 160 | 169 | 160 | 169 | 160 | 169 | 160 | 169 |
| **B6** | 160 | 166 | 160 | 166 | 160 | 166 | 160 | 166 |
| **B7** | 160 | 160 | 160 | 160 | 160 | 160 | 160 | 160 |
| **B8** | 160 | 159 | 160 | 159 | 160 | 159 | 160 | 159 |
| **B9** | 160 | 160 | 160 | 160 | 160 | 160 | 160 | 160 |
| **B10** | 160 | 159 | 160 | 159 | 160 | 159 | 160 | 159 |
| **B11** | 160 | 155 | 160 | 155 | 160 | 155 | 160 | 155 |
| **B12** | 160 | 157 | 160 | 157 | 160 | 157 | 160 | 157 |
| **B13** | 160 | 156 | 160 | 156 | 160 | 156 | 160 | 156 |
| **DA*** | 180 | 186 | 180 | 186 | 180 | 186 | 180 | 186 |
| **DH**** | 200 | 210 | 200 | 210 | 200 | 210 | 200 | 210 |

| | | | | | | | | |
|---|---|---|---|---|---|---|---|---|
| *DA: Die-adaptor **DH: Die-head | | | | | | | | |

Barrels B2 to B4 form the softening zone. Barrels B4 to B13 form the processing zone.

**Table 10: No. of Die Holes**

| | | | | | | | | |
|---|---|---|---|---|---|---|---|---|
| **No. of Die Holes** | **Blend 1** | | **Blend 2** | | **Blend 3** | | **Blend 4** | |
| | **Set** | **ACTUAL** | **Set** | **Actual** | **Set** | **Actual** | **Set** | **Actual** |
| | **-** | 4 | - | 4 | - | 4 | - | 4 |

**Table 11: Comparison of Example 1 and 2**

| **Parameter** | **Conventional Process** | **Process Disclosed** |
|---|---|---|
| Power consumption | 0.10 kg/kWhr | 0.08 kg/kWhr |
| Odor | Present | Largely absent |
| Colour of the blend | Yellow, Brownish Yellow, Dark Yellow | White, Pale Yellow |

**Table 12: A Comparison of the Whiteness Index**

| **S.No.** | **Sample ID** | **Product Obtained By** | **Whiteness Index** |
|---|---|---|---|
| 1 | RKB 11 %PPE (300°C 80rpm) | Conventional Process | 40.43 |
| 2 | FME 11%PPE(200-120°C,120rpm) | Disclosed Process | 60.138 |
| 3 | FME 11%PPE(200-160°C,80rpm) | Conventional Process | 54.61 |
| 4 | RKB 20%PPE (300°C 80rpm) | Conventional Process | 38.99 |
| 5 | FME 20%PPE (200-120°C, 120rpm) | Disclosed Process | 54.91 |
| 6 | FME 20%PPE (200-160°C, 80rpm) | Disclosed Process | 58.37 |
| 7 | RKB 30%PPE (300°C, 80rpm) | Conventional Process | 34.28 |
| 8 | FME 30%PPE (200-160°C, 80rpm) | Disclosed Process | 51.22 |
| 9 | FME 30%PPE (200-120°C, 120rpm) | Disclosed Process | 53.71 |
| 10 | RKB 50%PPE (300°C, 80rpm) | Conventional Process | 33.28 |
| 11 | FME 50%PPE (200-160°C, 180rpm) | Disclosed Process | 47.2 |
| 12 | FME 50%PPE (200 -120°C, 150rpm) | Disclosed Process | 50.8 |

The whiteness index is measured by BGD 556, Precise Computer Colorimeter, manufactured by Biuged Laboratory Instruments (Guangzhou) Co. Ltd.

### INDUSTRIAL APPLICABILITY

The combination of the DSE and FME results in gently pulling away of polymeric chains of the PPE thereby solubilizing the PPE in the molten styrene resin.

The disclosed process takes place at significantly lower temperatures as compared to the conventional processes involving melt-blending. Further, the process does not subject the mixture of the PPE and the styrene resin to high shear. The polymer chains are gently pulled away from each other using tensile forces. Due to lower temperature and shear the tendency of the PPE to oxidize is reduced or eliminated. Thus, the yellowing or charring of the PPE is also significantly reduced or eliminated. The process stabilizes the molecular weight of the PPE. The melting point of the blend is consistent from batch to batch due to the stabilization of the molecular weight of the PPE.

The blend obtained has improved colour, appearance and processability. The blend is also safe and economical. The blend is more robust for secondary operations such as injection molding. The colour of the blend is stable during the injection molding operation.

The process does not require high mechanical energy input that is typically associated with the processing of the PPE. The energy to process products made from the blend could be reduced by 50 percent or more.

Since the blend obtained in accordance with the present disclosure is free from any appearance defects the amount to titanium oxide required to be added in the blend during secondary processing is also reduced to 2 percent w/w or less. Due to the reduction in the amount of titanium oxide required to be added the product produced from such blends have reduced density. The density may be reduced by 18 to 20 percent.

The disclosed blend can be used to manufacture products that are bright and transparent. This enables application of products which earlier could not be made from the conventionally obtained blend due the appearance defects.

Also, the process does not produce an acrid odor associated with the processing of PPE at high temperature. Also, no visible outgassing is observed during the operation of the product. This eliminates the requirement of expensive environmental controls for addressing odor issues.

### SPECIFIC EMBODIMENTS ARE DESCRIBED BELOW

A process for preparing a blend having a styrene resin and a PPE in a co-rotating twin screw processor comprising providing in the twin screw processor, at least one processing zone including at least one DSE and at least one FME, feeding the styrene resin and the PPE in the twin screw processor, melting the styrene resin and solubilizing the PPE in the molten styrene resin in the at least one processing zone, and receiving the blend of the styrene resin and the PPE from the twin screw processor.

Such process(es) further comprising providing in the twin screw processor two processing zones, separated by at least one conveying element or at least one mixing element or a combination of the at least one conveying element and the at least one mixing element, the two processing zones configured to collectively melt the styrene resin and solubilize the polyphenylene ether in the molten styrene resin.

Such process(es) wherein the solubilization is carried out at a temperature in the range of 160 °C to 220 °C.

Such process(es) wherein the styrene resin and the polyphenylene ether are fed in the twin screw processor simultaneously.

Such process(es) wherein the styrene resin and the polyphenylene ether are fed into the twin screw processor at a feed rate of 20 to 50 kilogram per hour.

Such process(es) wherein the twin screw processor is run at a screw speed between 60 to 200 RPM.

Such process(es) further comprising softening the styrene resin prior to the processing zone at a temperature in the range of 120 to 300 °C.

Such process(es) wherein the polyphenylene ether is fed into the twin screw processor after the softening or the melting of the styrene resin.

Such process(es) wherein the styrene resin is fed into the twin screw processor in a form of pellets and the polyphenylene ether is fed into the twin screw processor in a form of powder.

Such process(es) wherein the polyphenylene ether is present in the range of 10 to 50 percent w/w in the blend.

Such process(es) wherein the styrene resin is selected from a group consisting of a homopolymer of styrene resin, a co-polymer of styrene resin and a combination thereof.

Such process(es) wherein the styrene resin is selected from a group consisting of polystyrene, general purpose polystyrene, high impact polystyrene, styrene acrylonitrile, acrylonitrile butadiene styrene resin or a combination thereof.

Such process(es) further comprising applying vacuum proximate at an end of the processing zone to remove volatile organic compounds or fumes released during the process.

A blend having a styrene resin and a polyphenylene ether wherein the polyphenylene ether is in the concentration range of 10 to 50 percent w/w and the blend has a whiteness index of at least 45 to 60.

Such blend(s) wherein the polyphenylene ether is in the concentration range of 10 to 12 percent w/w and the blend has a whiteness index of at least 60.

Such blend(s) wherein the polyphenylene ether is in a concentration range of 20 to 30 percent w/w and the blend has a whiteness index of at least 50.

Such blend(s) wherein the polyphenylene ether is in a concentration range of 50 percent w/w and the blend has a whiteness index of at least 45.

Such blend(s) wherein the blend is in a form of pellets or strands.

Such blend(s) having less than 10 percent dark spots formed by the polyphenylene ether and the styrene resin visible, on the surface of the pellets or strands.

Such blend(s) wherein the styrene resin is selected from a group consisting of a homopolymer of styrene resin, a co-polymer of styrene resin and a combination thereof.

Such blend(s) wherein the styrene resin is selected from a group consisting of polystyrene, general purpose polystyrene, high impact polystyrene, styrene acrylonitrile, acrylonitrile butadiene styrene resin or a combination thereof.

A co-rotating twin screw processor for preparing a blend having a styrene resin and a polyphenylene ether (PPE) comprising a first processing zone comprising at least one DSE and at least one FME and a second processing zone comprising at least one DSE and at least one FME, the first and the second processing zone separated by at least one conveying element or at least one mixing element or a combination of the at least one conveying element and the at least one mixing element and the first processing zone and the second processing zones configured to collectively melt the styrene resin and solubilize the PPE in the molten styrene resin.

Such processor(s) further comprising a third processing zone including at least at least one element having a continuous flight helically formed thereon having a lead `L', wherein either the flight transforms at least once from an integer lobe flight into a non-integer lobe flight in a fraction of the lead 'L' and transforms back to an integer lobe flight in a fraction of the lead 'L' or the flight transforms at least once from a non-integer lobe flight to an integer lobe flight in a fraction of the lead 'L' and transforms back to an non-integer lobe flight in a fraction of the lead 'L' and at least one fractional lobe element intermediate a first integer element (n) and a second integer element (N), the third processing zone separated from the second processing zone by at least one conveying element or at least one mixing element or a combination of the at least one conveying element and the at least one mixing element, and configured to melt and solubilize the polyphenylene ether in the molten styrene resin along with the first and the second processing zone.

Such processor(s) wherein the first processing zone includes two element having a continuous flight helically formed thereon having a lead 'L', wherein either the flight transforms at least once from an integer lobe flight into a non-integer lobe flight in a fraction of the lead 'L' and transforms back to an integer lobe flight in a fraction of the lead 'L' or the flight transforms at least once from a non-integer lobe flight to an integer lobe flight in a fraction of the lead 'L' and transforms back to an non-integer lobe flight in a fraction of the lead 'L' and one fractional lobe element intermediate a first integer element (n) and a second integer element (N) and wherein the first processing zone begins prior to the mid-point of the twin screw processor.

## Claims

1. A process for preparing a blend having a styrene resin and a polyphenylene ether in a co-rotating twin screw processor, comprising:
providing in the twin screw processor, at least one processing zone including at least one element comprising a continuous flight helically formed thereon having a lead 'L', wherein either the flight transforms at least once from an integer lobe flight into a non-integer lobe flight in a fraction of the lead 'L' and transforms back to an integer lobe flight in a fraction of the lead 'L' or the flight transforms at least once from a non-integer lobe flight to an integer lobe flight in a fraction of the lead 'L' and transforms back to an non-integer lobe flight in a fraction of the lead 'L' and at least one fractional lobe element intermediate a first integer element (n) and a second integer element (N);
feeding the styrene resin and the polyphenylene ether in the twin screw processor;
melting the styrene resin and solubilizing the polyphenylene ether in the molten styrene resin in the at least one processing zone; and
receiving the blend of the styrene resin and the polyphenylene ether from the twin screw processor.

2. The process as claimed in claim 1 comprising providing in the twin screw processor two processing zones, separated by at least one conveying element or at least one mixing element or a combination of the at least one conveying element and the at least one mixing element, the two processing zones configured to collectively melt the styrene resin and solubilize the polyphenylene ether in the molten styrene resin.

3. The process as claimed in claim 1 or 2, wherein the solubilization is carried out at a temperature in the range of 160 °C to 220 °C.

4. The process as claimed in any of claims 1 to 3, wherein the styrene resin and the polyphenylene ether are fed in the twin screw processor simultaneously.

5. The process as claimed in any of claims 1 to 4, wherein the styrene resin and the polyphenylene ether are fed into the twin screw processor at a feed rate of 20 to 50 kilogram per hour.

6. The process as claimed in any of claims 1 to 5, wherein the twin screw processor is run at a screw speed between 60 to 200 RPM.

7. The process as claimed in any of claims 1 to 6, further comprising softening the styrene resin prior to the processing zone at a temperature in the range of 120 to 300 °C, and wherein optionally the polyphenylene ether is fed into the twin screw processor after the softening or the melting of the styrene resin.

8. The process as claimed in any of claims 1 to 7, wherein the styrene resin is fed into the twin screw processor in a form of pellets and the polyphenylene ether is fed into the twin screw processor in a form of powder.

9. The process as claimed in any of claims 1 to 8, wherein the polyphenylene ether is present in the range of 10 to 50 percent w/w in the blend.

10. The process as claimed in any of claims 1 to 9, wherein the styrene resin is selected from a group consisting of a homopolymer of styrene resin, a co-polymer of styrene resin and a combination thereof, wherein the co-polymer of styrene resin may preferably be styrene acrylonitrile and/or acrylonitrile butadiene styrene resin.

11. The process as claimed in any of claims 1 to 10, further comprising applying vacuum proximate at an end of the processing zone to remove volatile organic compounds or fumes released during the process.

12. A blend having a styrene resin and a polyphenylene ether wherein the polyphenylene ether is in the concentration range of 10 to 50 percent w/w and the blend has a whiteness index of at least 45.

13. The blend as claimed in claim 12 wherein (1) the polyphenylene ether is in the concentration range of 10 to 12 percent w/w and the blend has a whiteness index of at least 60; (2) the polyphenylene ether is in a concentration range of 20 to 30 percent w/w and the blend has a whiteness index of at least 50; or (3) the polyphenylene ether is in a concentration range of 50 percent w/w and the blend has a whiteness index of at least 45.

14. The blend as claimed in claim 12 or 13, wherein the blend is in a form of pellets or strands, with preferably less than 10 percent dark spots visible on the surface of the pellets or strands, the dark spots being formed by the polyphenylene ether and the styrene resin.

15. The blend as claimed in any of claims 12 to 14, wherein the styrene resin is selected from a group consisting of a homopolymer of styrene resin, a co-polymer of styrene resin and a combination thereof, wherein the co-polymer of styrene resin may preferably be styrene acrylonitrile and/or acrylonitrile butadiene styrene resin.

16. A co-rotating twin screw processor for preparing a blend having a styrene resin and a polyphenylene ether comprising:
a first processing zone comprising at least one element comprising a continuous flight helically formed thereon having a lead 'L', wherein either the flight transforms at least once from an integer lobe flight into a non-integer lobe flight in a fraction of the lead 'L' and transforms back to an integer lobe flight in a fraction of the lead 'L' or the flight transforms at least once from a non-integer lobe flight to an integer lobe flight in a fraction of the lead 'L' and transforms back to an non-integer lobe flight in a fraction of the lead 'L' and at least one fractional lobe element intermediate a first integer element (n) and a second integer element (N); and
a second processing zone comprising at least one element comprising a continuous flight helically formed thereon having a lead 'L', wherein either the flight transforms at least once from an integer lobe flight into a non-integer lobe flight in a fraction of the lead 'L' and transforms back to an integer lobe flight in a fraction of the lead 'L' or the flight transforms at least once from a non-integer lobe flight to an integer lobe flight in a fraction of the lead 'L' and transforms back to an non-integer lobe flight in a fraction of the lead 'L' and at least one fractional lobe element intermediate a first integer element (n) and a second integer element (N);
the first and the second processing zone separated by at least one conveying element or at least one mixing element or a combination of the at least one conveying element and the at least one mixing element, and configured to collectively melt the styrene resin and solubilize the polyphenylene ether in the molten styrene resin.

17. The twin screw processor as claimed in claim 16 further comprising a third processing zone including at least at least one element comprising a continuous flight helically formed thereon having a lead 'L', wherein either the flight transforms at least once from an integer lobe flight into a non-integer lobe flight in a fraction of the lead 'L' and transforms back to an integer lobe flight in a fraction of the lead 'L' or the flight transforms at least once from a non-integer lobe flight to an integer lobe flight in a fraction of the lead 'L' and transforms back to an non-integer lobe flight in a fraction of the lead 'L' and at least one fractional lobe element intermediate a first integer element (n) and a second integer element (N),
the third processing zone separated from the second processing zone by at least one conveying element or at least one mixing element or a combination of the at least one conveying element and the at least one mixing element, and configured to melt and solubilize the polyphenylene ether in the molten styrene resin along with the first processing zone and the second processing zone.

18. The twin screw processor as claimed in claim 16 or 17 wherein the first processing zone includes two element having a continuous flight helically formed thereon having a lead 'L', wherein either the flight transforms at least once from an integer lobe flight into a non-integer lobe flight in a fraction of the lead 'L' and transforms back to an integer lobe flight in a fraction of the lead 'L' or the flight transforms at least once from a non-integer lobe flight to an integer lobe flight in a fraction of the lead 'L' and transforms back to an non-integer lobe flight in a fraction of the lead 'L' and one fractional lobe element intermediate a first integer element (n) and a second integer element (N) and wherein the first processing zone begins prior to the mid-point of the twin screw processor.
